# EUROPÄISCHE PATENTSCHRIFT

(11) **EP 2 795 451 B1**
(45) Veröffentlichungstag und Bekanntmachung des Hinweises auf die Patenterteilung: **03.06.2015**
(21) Anmeldenummer: 12813293.3
(22) Anmeldetag: 11.12.2012
(51) Int. Cl.: G06F 3/0488

(54) **VERFAHREN ZUM BETRIEB EINER MEHRFACHBERÜHRUNGSFÄHIGEN ANZEIGE UND VORRICHTUNG MIT EINER MEHRFACHBERÜHRUNGSFÄHIGEN ANZEIGE**
METHOD FOR OPERATING A MULTI-TOUCH-CAPABLE DISPLAY AND DEVICE HAVING A MULTI-TOUCH-CAPABLE DISPLAY
PROCÉDÉ DE FONCTIONNEMENT D'UN AFFICHAGE TACTILE MULTIPOINTS ET DISPOSITIF AVEC AFFICHAGE TACTILE MULTIPOINTS

(30) Priorität: 22.12.2011 DE 102011056940
(43) Veröffentlichungstag der Anmeldung: 29.10.2014
(73) Patentinhaber: Bauhaus-Universität Weimar, 99423 Weimar (DE)
(72) Erfinder: KULIK, Alexander, 99423 Weimar (DE); FRÖHLICH, Bernd, 99423 Weimar (DE); DITTRICH, Jan, 99427 Weimar (DE)
(74) Vertreter: Engel, Christoph Klaus
(86) Internationale Anmeldenummer: PCT/EP2012/075034
(87) Internationale Veröffentlichungsnummer: WO 2013/092288

(56) Entgegenhaltungen:
- WO-A1-2009/121227
- WO-A2-2007/014082
- US-A1- 2010 088 641

## Beschreibung

Die vorliegende Erfindung betrifft ein Verfahren zum Betrieb einer mehrfachberührungsfähigen Anzeige, wie z. B. ein mehrfachberührungsfähiger Berührungsbildschirm, welcher mit zwei Fingern des Benutzers bedient werden kann. Im Weiteren betrifft die Erfindung eine Vorrichtung mit Computerfunktionalität, welche eine mehrfachberührungsfähige Anzeige umfasst.

Die US 2010/0328227 A1 zeigt eine Mehrfinger-Maus-Emulation, durch welche eine Computermaus mit mehreren Maustasten auf einem Touchscreen simuliert wird.

Die DE 20 2006 020 369 U1 zeigt eine multifunktionale handgehaltene Vorrichtung, bei welcher hinsichtlich der Eingabegestik zwischen leichten und harten Berührungen unterschieden wird.

Die US 2011/0041096 A1 zeigt das Manipulieren grafischer Elemente durch Gesten. Durch eine Zweihandbedienung wird die Auswahl in Menüs mit mehreren Hierarchiestufen ermöglicht.

Aus der US 2011/0216095 A1 ist ein Verfahren zur Bedienung von berührungsempfindlichen Oberflächen bekannt, bei welchem unterschieden wird, ob innerhalb eines vorgegebenen Zeitrahmens ein oder zwei Berührungen der berührungsempfindlichen Oberfläche erfolgten.

Die US 2011/0227947 A1 zeigt eine Multi-Touch-Benutzerschnittstelle, u. a. mit einer mehrfachberührungsfähigen Maus.

In der US 6,958,749 B1 ist ein Verfahren zum Bedienen eines Touch-Panels beschrieben, bei welchem ein dargestelltes Objekt mithilfe eines Fingers verschoben wird. Erfolgt die Berührung des Touch-Panels mit zwei Fingern, so wird das Objekt gedreht.

Die US 8,004,498 B1 zeigt ein Verfahren zum temporären Verankern eines Teiles einer Grafik auf einem Touch-Pad. Hierbei erzeugt eine Hand des Nutzers in Abhängigkeit von der Dauer der Berührung ein Festhalte-Signal für einen Teil eines grafischen Elementes, während die andere Hand mit einem Stift einen zweiten Teil des grafischen Elementes bearbeiten kann.

Die WO 2009/088561 A1 zeigt ein Verfahren für eine Zweihand-Benutzerschnittstelle mit Gestikerkennung. Das Erkennen der Gesten erfolgt mit einer Kamera.

Die WO 2005/114369 A2 zeigt einen Berührungsbildschirm, welcher mit mehreren Fingern bedient werden kann.

Aus der WO.2006/020305 A2 ist ein Verfahren zur Erkennung von Gesten auf berührungsempfindlichen Eingabegeräten bekannt. Bei einer Ausführungsform dieses Verfahrens können dargestellte Objekte mithilfe von zwei Fingern skaliert werden. Bei einer weiteren Ausführungsform kann mithilfe eines Daumens eine Modusumschaltung erfolgen, während mit einem weiteren Finger gleichzeitig Objekte verschoben werden können.

Die DE 21 2008 000 001 U1 zeigt eine Vorrichtung zum Scrollen von Listen sowie zum Verschieben, Skalieren und Rotieren von Dokumenten auf einer Berührungsbildschirmanzeige. Für das Rotieren und Skalieren der dargestellten Inhalte ist die Berührungsbildschirmanzeige mit zwei Fingern zu bedienen.

Die DE 20 2008 001 338 U1 zeigt eine Mehrpunkt-Abtastvorrichtung, mit welcher mehrere Gesten erkannt werden können.

Die DE 20 2005 021 492 U1 zeigt eine elektronische Vorrichtung mit berührungsempfindlicher Eingabeeinrichtung, bei welcher Gesten erkannt werden, um neue Medienobjekte anzuzeigen.

Die WO 2009/100421 A2 zeigt ein Verfahren zur Manipulation von Objekten auf einem Berührungsbildschirm. Bei diesem Verfahren wird die relative Position zwischen einer ersten Berührung und einer zweiten Berührung ausgewertet.

Die WO 2011/107839 A1 zeigt ein Verfahren zur Durchführung von "Drag-and-Drop"-Eingaben auf mehrfachberührungsempfindlichen Anzeigen. In den Fig. 3A bis 3G der WO 2011/107839 A1 ist die Bedienung von Kontaktlisten veranschaulicht. Einzelne Berührungen dienen der Verschiebung der Liste oder der Auswahl einzelner Einträge. Berührungen mit zwei Fingern dienen dem Drag-and-Drop, wobei gleichzeitig Objekte auf zwei Hierarchieebenen manipuliert werden. Als Kriterium zur Detektion zweier Berührungen gilt, dass sich die beiden Berührungen zeitlich überlappen. Der Ablauf einer bestimmten Zeitdauer stellt somit kein Kriterium dar. Beispielsweise führen auch zwei kurz aufeinanderfolgende Doppelberührungen mit zwei Fingern zum Drag-and-Drop. Eine Doppelberührung mit zwei Fingern führt immer in den Drag-and-Drop-Modus, sodass eine Manipulation eines einzelnen Interaktionsobjektes (z. B. Zoomen) oder zweier Interaktionsobjekte derselben Hierarchieebene durch zwei gleichzeitige Berührungen nicht möglich ist.

Die Aufgabe der vorliegenden Erfindung besteht ausgehend vom Stand der Technik darin, die Eingabe von Informationen bei einer mehrfachberührungsfähigen Anzeige zu erleichtern und in Korrespondenz zu Erfahrungen aus der physischen Realität zu bringen.

Die genannte Aufgabe wird gelöst durch Verfahren zum Betrieb einer mehrfachberührungsfähigen Anzeige gemäß den beigefügten Ansprüchen 1 und 9 sowie durch eine Vorrichtung mit Computerfunktionalität gemäß dem beigefügten Anspruch 10.

Einen ersten Gegenstand der Erfindung bildet ein Verfahren zum Betrieb einer von einer Datenverarbeitungseinheit angesteuerten mehrfachberührungsfähigen Anzeige, wie z. B. ein mehrfachberührungsfähiger Berührungsbildschirm in Form eines Touchscreens eines Tablet-PCs. Die mehrfachberührungsfähige Anzeige kann alternativ auch durch eine zwei- oder dreidimensionale Projektionseinrichtung mit Dateneingabegeräten, wie Datenhandschuhen oder 3D-Mäusen gebildet sein, wobei unmittelbare Berührungen der Dateneingabegeräte zu virtuellen Berührungen der dargestellten Inhalte führen. Das erfindungsgemäße Verfahren dient insbesondere dazu, Gesten bei der Bedienung der mehrfachberührungsfähigen Anzeige auszuwerten und Darstellungen der mehrfachberührungsfähigen Anzeige entsprechend anzupassen.

In einem Schritt des Verfahrens gemäß dem ersten Gegenstand der Erfindung werden manipulierbare Inhalte auf bzw. innerhalb der Anzeige visuell dargestellt. Die Inhalte umfassen hierarchisch strukturierte Interaktionsobjekte. Die Interaktionsobjekte sind dadurch gekennzeichnet, dass deren visuelle Darstellung mittelbar oder unmittelbar auf bzw. innerhalb der mehrfachberührungsfähigen Anzeige berührt werden kann, um die Interaktionsobjekte dadurch zu modifizieren. Beispielsweise erfolgt die Berührung auf einem Berührungsbildschirm unmittelbar über der visuellen Darstellung. Ist die mehrfachberührungsfähige Anzeige hingegen durch eine Projektionseinrichtung mit Datenhandschuhen gebildet, erfolgt eine Berührung innerhalb der Datenhandschuhe, wodurch es zu einer virtuelle Berührung der dargestellte Interaktionsobjekte kommt. Die Interaktionsobjekte sind hierarchisch strukturiert, sodass es untergeordnete Interaktionsobjekte und übergeordnete Interaktionsobjekte gibt. Es sind zumindest Interaktionsobjekte einer ersten Hierarchieebene und einer zweiten Hierarchieebene vorhanden.

In einem weiteren Schritt des erfindungsgemäßen Verfahrens wird eine erste durch den Bediener vorgenommene Berührung der mehrfachberührungsfähigen Anzeige detektiert, was zu von der Datenverarbeitungseinheit verarbeitungsfähigen Informationen über die erste Berührung führt. Diese Informationen werden zur Manipulation von Interaktionsobjekten der ersten Hierarchieebene verwendet. In einem weiteren Schritt wird eine zweite Berührung der mehrfachberührungsfähigen Anzeige detektiert, was zu von der Datenverarbeitungseinheit verarbeitungsfähigen Informationen über die zweite Berührung führt. Die zweite Berührung ist dadurch gekennzeichnet, dass sie sich von der ersten Berührung örtlich unterscheidet, sodass darauf geschlossen werden kann, dass diese zweite Berührung durch ein zweites Objekt, beispielsweise durch einen zweiten Finger des Bedieners vorgenommen wurde. Erfindungsgemäß werden die Informationen über die zweite Berührung von der Datenverarbeitungseinheit zur Manipulation von Interaktionsobjekten der zweiten Hierarchieebene verwendet, wenn die zweite Berührung mehr als eine vorbestimmte Zeitdauer nach der ersten Berührung detektiert wird und die erste Berührung weiterhin detektiert wird. Das Abwarten der vorbestimmten Zeitdauer dient also dazu, die Intention des Benutzers zu erkennen, dass sich die zweite Berührung auf ein Interaktionsobjekt der zweiten Hierarchieebene beziehen soll, beispielsweise ein Interaktionsobjekt, welches dem zu manipulierenden Interaktionsobjekt der ersten Hierarchieebene untergeordnet ist. Hingegen werden erfindungsgemäß die Informationen über die zweite Berührung von der Datenverarbeitungseinheit zur Manipulation von Interaktionsobjekten der ersten Hierarchieebene verwendet, wenn die zweite Berührung nicht mehr als die vorbestimmte Zeitdauer nach der ersten Berührung detektiert wird. Somit werden zwei Berührungen des Benutzers, welche gleichzeitig oder in einem geringen zeitlichen Abstand erfolgen, dahingehend verstanden, dass sie sich auf Interaktionsobjekte derselben Hierarchieebene, nämlich der ersten Hierarchieebene, und bevorzugt auf dasselbe Interaktionsobjekt der ersten Hierarchieebene beziehen sollen.

Ein besonderer Vorteil des erfindungsgemäßen Verfahrens besteht darin, dass Interaktionsobjekte unterschiedlicher Hierarchieebenen durch den Benutzer manipuliert werden können, ohne dass es hierfür weiterer Sensorik bedarf. Ungewollte Wechsel der Hierarchieebene sind dennoch weitgehend verhindert. Beim Wechsel der Hierarchieebene wird der Ablauf der Bedienung nicht unterbrochen. Der Wechsel der Hierarchieebene erfordert keine spürbare Wartezeit. Ein weiterer Vorteil des erfindungsgemäßen Verfahrens besteht darin, dass keine zusätzlichen Bedienelemente auf bzw. innerhalb der mehrfachberührungsfähigen Anzeige dargestellt werden müssen, sodass dieser für die Inhalte weiterer Anwendungen bereitsteht. Bei dem erfindungsgemäßen Verfahren sind Fehleingaben durch Erschütterungen weitgehend verhindert, insbesondere bei Berührungsbildschirmen. Das erfindungsgemäße Verfahren kollidiert nicht mit anderen Verfahren zur Bedienung mehrfachberührungsfähiger Anzeigen, sodass sich beispielsweise synchrone Eingaben in derselben Hierarchieebene weiterhin durchführen lassen. Das erfindungsgemäße Verfahren ist bevorzugt unabhängig von der Geschwindigkeit der sich örtlich ändernden Berührung auf bzw. innerhalb der mehrfachberührungsfähigen Anzeige und bevorzugt auch unabhängig von der Position der Berührung auf bzw. innerhalb der mehrfachberührungsfähigen Anzeige.

Die erfinderische Idee besteht gerade darin, den Wechsel von einem beliebigen Modus zur Bearbeitung eines oder mehrerer Interaktionsobjekte einer ersten Hierarchieebene (z. B. Aktivieren oder Bewegen einzelner Interaktionsobjekte, Zoomen eines Interaktionsobjektes) in einen Modus zur Bearbeitung von Interaktionsobjekten auf zwei Hierarchieebenen festzulegen. Hierfür wird eine vorbestimmte Zeitdauer zwischen den beiden Berührungen abgewartet. Wenn weniger als die vorbestimmte Zeitdauer bis zur zweiten Berührung vergeht, führt dies zum Verbleiben in dem Modus zur Bearbeitung einzelner Interaktionsobjektes in der ersten Ebene. Dabei ist es unerheblich, ob die erste Berührung noch besteht oder nicht. Es gibt nämlich derartige Modi, die zwei gleichzeitige Berührungen erfordern (z. B. Zoomen eines Interaktionsobjektes). Auch gibt es Modi, die nur einzelne Berührungen erfordern (z. B. Aktivieren oder Bewegen eines Interaktionsobjektes). So ist es denkbar, dass die erste Berührung noch besteht oder auch dass die erste Berührung nicht mehr besteht, wenn die zweite Berührung innerhalb der vorbestimmten Zeitdauer nach der ersten Berührung beginnt. In beiden Fällen gelangt man nicht in den Modus zur Manipulation von Interaktionsobjekten auf zwei Hierarchieebenen durch zwei gleichzeitige Berührungen (z. B. "Hold-and-Move", siehe unten).

Bei bevorzugten Ausführungsformen des erfindungsgemäßen Verfahrens werden die Informationen über die erste Berührung und die Informationen über die zweite Berührung jeweils gemäß einem ersten Manipulationsmodus verarbeitet, wenn die Informationen über die zweite Berührung zur Manipulation von Interaktionsobjekten der zweiten Hierarchieebene verwendet werden. Der Bediener kann dadurch gleichzeitig ein übergeordnetes Interaktionsobjekt und ein untergeordnetes Interaktionsobjekt gleichartig manipulieren. Beispielsweise kann der Bediener ein untergeordnetes Interaktionsobjekt gegenüber einem übergeordneten Interaktionsobjekt verschieben, indem er sowohl das übergeordnete Interaktionsobjekt als auch das untergeordnete Interaktionsobjekt auf bzw. innerhalb der mehrfachberührungsfähigen Anzeige bewegt.

Bei weiteren bevorzugten Ausführungsformen des erfindungsgemäßen Verfahrens werden die Informationen über die erste Berührung und die Informationen über die zweite Berührung gemeinsam gemäß einem zweiten Manipulationsmodus verarbeitet, wenn die Informationen über die zweite Berührung zur Manipulation von Interaktionsobjekten der ersten Hierarchieebene verwendet werden. Dabei wird bevorzugt ein und dasselbe Interaktionsobjekt manipuliert. Folglich kann der Benutzer beispielsweise seinen zweiten Finger dazu benutzen, komplexere Manipulationen gemäß dem zweiten Manipulationsmodus an dem Interaktionsobjekt der ersten Hierarchieebene vorzunehmen, wenn er den zweiten Finger nicht dazu nutzen möchte, Manipulationen an einem Interaktionsobjekt der zweiten Hierarchieebene vorzunehmen.

Bei weiteren bevorzugten Ausführungsformen des erfindungsgemäßen Verfahrens werden die Informationen über die zweite Berührung gemäß dem ersten Manipulationsmodus verarbeitet, wenn die erste Berührung nicht mehr detektiert wird. Dadurch kann der Benutzer unterbrechungsfrei zum ersten Manipulationsmodus zurückkehren, nachdem er ein Interaktionsobjekt gemäß dem zweiten Manipulationsmodus durch zwei Berührungen der mehrfachberührungsfähigen Anzeige manipuliert hat.

Die erste Hierarchieebene der Interaktionsobjekte ist bevorzugt unmittelbar höher als die zweite Hierarchieebene der Interaktionsobjekte. Folglich umfassen die Interaktionsobjekte der ersten Hierarchieebene jeweils Interaktionsobjekte der zweiten Hierarchieebene.

Die Interaktionsobjekte der zweiten Hierarchieebene sind bevorzugt elementar, sodass die zweite Hierarchieebene die unterste Hierarchieebene darstellt.

Die Interaktionsobjekte der ersten Hierarchieebene sind bevorzugt durch Gruppen gebildet, welche jeweils die elementaren Interaktionsobjekte der zweiten Hierarchieebene umfassen können.

Die Interaktionsobjekte der zweiten Hierarchieebene sind bevorzugt durch Symbole (Icons), Piktogramme, Bilder und/oder Fenster (Windows) gebildet. Die Interaktionsobjekte der ersten Hierarchieebene sind bevorzugt durch symbolisierte Ordner und/oder Fenster gebildet.

Bei bevorzugten Ausführungsformen des erfindungsgemäßen Verfahrens umfassen die dargestellten Inhalte hierarchisch strukturierte Interaktionsobjekte auf mehr als zwei Hierarchieebenen. Das erfindungsgemäße Verfahren ist nämlich dazu geeignet, dem Bediener eine intuitive und schnelle Interaktion über mehrere Hierarchieebenen hinweg zu ermöglichen.

Der erste Manipulationsmodus und der zweite Manipulationsmodus schreiben bevorzugt jeweils vor, wie die dargestellten Interaktionsobjekte ausgehend von den Informationen über die jeweilige Berührung zu verändern sind. Dabei wird bevorzugt jeweils dasjenige der Interaktionsobjekte manipuliert, welches am Ort der jeweiligen Berührung auf bzw. innerhalb der mehrfachberührungsfähigen Anzeige visuell dargestellt ist.

Das Manipulieren von elementaren Interaktionsobjekten der zweiten Hierarchieebene gemäß dem ersten Manipulationsmodus erlaubt es beispielsweise, das zu manipulierende Interaktionsobjekt einer anderen der Gruppen der ersten Hierarchieebene zuzuordnen.

Bevorzugt wird jeweils diejenige Gruppe der ersten Hierarchieebene manipuliert, welche am Ort der ersten Berührung auf bzw. innerhalb der mehrfachberührungsfähigen Anzeige dargestellt ist.

Die Interaktionsobjekte werden bevorzugt unmittelbar nach dem Detektieren der ersten Berührung bzw. unmittelbar nach dem Detektieren der zweiten Berührung verändert. Dabei werden die Interaktionsobjekte bevorzugt zeitlich gleichlaufend mit örtlichen Veränderungen der detektierten ersten Berührung bzw. der detektierten zweiten Berührung verändert.

Bei bevorzugten Ausführungsformen des erfindungsgemäßen Verfahrens werden dem Bediener durch den ersten Manipulationsmodus Funktionen zur Verfügung gestellt, welche ihm eine Navigation in den durch die Anzeige dargestellten Inhalten ermöglichen. Daher führt der erste Manipulationsmodus bevorzugt zum Aktivieren desjenigen der auf bzw. innerhalb der mehrfachberührungsfähigen Anzeige dargestellten Interaktionsobjektes der ersten Hierarchieebene, welches auf bzw. innerhalb der mehrfachberührungsfähigen Anzeige dort dargestellt ist, wo die erste Berührung erstmalig detektiert wird bzw. wohin die erste Berührung bei der erstmaligen Detektion gerichtet ist. Gleichzeitig werden bevorzugt alle übrigen der durch die Anzeige dargestellten Interaktionsobjekte der ersten Hierarchieebene passiviert. In gleicher Weise führt der erste Manipulationsmodus bevorzugt zum Aktivieren desjenigen der auf durch die Anzeige dargestellten Interaktionsobjektes der zweiten Hierarchieebene, welches auf bzw. innerhalb der mehrfachberührungsfähigen Anzeige dort dargestellt ist, wo die zweite Berührung erstmalig detektiert wird bzw. wohin die zweite Berührung bei der erstmaligen Detektion gerichtet ist, wenn die Informationen über die zweite Berührung zur Manipulation von Interaktionsobjekten der zweiten Hierarchieebene verwendet werden. Der erste Manipulationsmodus führt bevorzugt weiterhin zum Bewegen des aktivierten Interaktionsobjektes entsprechend der Bewegung der jeweiligen Berührung auf bzw. innerhalb der mehrfachberührungsfähigen Anzeige. Wenn die Informationen der zweiten Berührung zur Manipulation von Interaktionsobjekten der zweiten Hierarchieebene verwendet werden, d. h. wenn der Bediener die zweite Berührung mehr als die vorbestimmte Zeitdauer nach der ersten Berührung vornahm, kann der Bediener ein übergeordnetes Interaktionsobjekt und ein untergeordnetes Interaktionsobjekt gleichzeitig bewegen, um diese z. B. relativ zueinander auf bzw. innerhalb der mehrfachberührungsfähigen Anzeige zu verschieben. Auch kann der Bediener die erste Berührung ortsfest belassen, sodass der Ort des Interaktionsobjektes der ersten Hierarchieebene nicht verändert wird, während der Benutzer das Interaktionsobjekt der zweiten Hierarchieebene bewegt. Somit erlaubt das erfindungsgemäße Verfahren dem Bediener das Anwenden einer "Halten und Bewegen"-Metapher (Hold and Move) zur Eingabe von Daten.

Der zweite Manipulationsmodus führt bevorzugt zum Verändern des an dem Ort der jeweiligen Berührung auf bzw. in der mehrfachberührungsfähigen Anzeige dargestellten Interaktionsobjektes entsprechend der Bewegung der jeweiligen Berührung auf bzw. innerhalb der mehrfachberührungsfähigen Anzeige. Besonders bevorzugt führt der zweite Manipulationsmodus zum Skalieren oder zum Drehen des an dem Ort der jeweiligen realen bzw. virtuellen Berührung dargestellten Interaktionsobjektes.

Im ersten Manipulationsmodus werden bevorzugt die Informationen einer einzelnen Berührung auf das zu manipulierende Interaktionsobjekt angewendet. Hingegen werden im zweiten Manipulationsmodus bevorzugt die Informationen beider Berührungen auf dasselbe einzelne Interaktionsobjekt angewendet. Dabei werden bevorzugt die Informationen beider Berührungen in Relation zueinander verarbeitet.

Die Berührungen erfolgen bevorzugt durch einzelne Finger des Bedieners; alternativ können die Berührungen auch durch Hände oder durch von dem Benutzer verwendete Stifte erfolgen. Insofern die Anzeige durch einen Berührungsbildschirm gebildet ist, erfolgen die Berührungen auf der Oberfläche des Berührungsbildschirmes. Insofern die Anzeige durch eine Projektionseinrichtung mit Dateneingabegeräten, wie Datenhandschuhen oder 3D-Mäusen gebildet ist, erfolgen die unmittelbaren Berührungen auf bzw. in den Dateneingabegeräten, wobei die Position und/oder Ausrichtung der Dateneingabegeräte gegenüber den dargestellten Inhalten dasjenige Interaktionsobjekt bestimmt, welches virtuell berührt wird.

Die beim Detektieren der Berührungen ermittelten Informationen beschreiben bevorzugt den Ort der Berührung auf der durch einen Berührungsbildschirm gebildeten Anzeige und weiterhin bevorzugt auch die zeitliche Veränderung des Ortes der Berührung auf dem Berührungsbildschirm.

Die vorbestimmte Zeitdauer beträgt bevorzugt zwischen 10 ms und 3 s, weiterhin bevorzugt zwischen 20 ms und 1 s, besonders bevorzugt zwischen 50 ms und 200 ms. Im Übrigen beträgt die vorbestimmte Zeitdauer besonders bevorzugt 100 ms ± 20 ms.

Die mehrfachberührungsfähige Anzeige ist bevorzugt durch einen mehrfachberührungsfähigen Berührungsbildschirm gebildet, beispielsweise durch einen Touchscreen eines Tablet-PCs.

Einen zweiten Gegenstand der Erfindung bildet wiederum ein Verfahren zum Betrieb einer von einer Datenverarbeitungseinheit angesteuerten mehrfachberührungsfähigen Anzeige. Dieses Verfahren weist die gleichen Anwendungsbereiche wie das Verfahren gemäß dem ersten Gegenstand der Erfindung auf.

In einem Schritt des Verfahrens gemäß dem zweiten Gegenstand der Erfindung erfolgt ein visuelles Darstellen von Inhalten auf bzw. innerhalb der mehrfachberührungsfähigen Anzeige. Diese Inhalte sind von der Datenverarbeitungseinheit gemäß einem ersten Manipulationsmodus und alternativ gemäß einem zweiten Manipulationsmodus manipulierbar. Der erste Manipulationsmodus ist vom zweiten Manipulationsmodus verschieden. In einem weiteren Schritt erfolgt ein Detektieren einer ersten durch den Bediener vorgenommenen Berührung der mehrfachberührungsfähigen Anzeige, was zu von der Datenverarbeitungseinheit verarbeitungsfähigen Informationen über die erste Berührung führt. In einem weiteren Schritt erfolgt ein Detektieren einer zweiten Berührung der mehrfachberührungsfähigen Anzeige, was zu von der Datenverarbeitungseinheit verarbeitungsfähigen Informationen über die zweite Berührung führt.

Erfindungsgemäß werden die Informationen über die erste Berührung und die Informationen über die zweite Berührung'jeweils gemäß dem ersten Manipulationsmodus für die Manipulation des zu manipulierenden Inhaltes verarbeitet, wenn die zweite Berührung mehr als eine vorbestimmte Zeitdauer nach der ersten Berührung detektiert wird und die erste Berührung weiterhin detektiert wird. Hingegen werden die Informationen über die erste Berührung und die Informationen über die zweite Berührung gemäß dem zweiten Manipulationsmodus für die Manipulation des zu manipulierenden Inhaltes verarbeitet, wenn die zweite Berührung nicht mehr als eine vorbestimmte Zeitdauer nach der ersten Berührung detektiert wird und vorzugsweise die erste Berührung weiterhin detektiert wird.

Das Verfahren gemäß dem zweiten Gegenstand der Erfindung erlaubt ein schnelles und intuitives Umschalten zwischen zwei Manipulationsmodi. Die erfinderische Idee besteht gerade darin, den Wechsel von einem ersten Manipulationsmodus (z. B. Hold-and-Move) in einen zweiten Manipulationsmodus (z. B. Aktiveren oder Bewegen einzelner Interaktionsobjekte, Zoomen eines Interaktionsobjektes) und umgekehrt festzulegen. Hierfür wird eine vorbestimmte Zeitdauer zwischen den beiden Berührungen abgewartet. Wenn weniger als die vorbestimmte Zeitdauer bis zur zweiten Berührung vergeht, führt dies zum Wechsel in den zweiten Manipulationsmodus. Dabei ist es unerheblich, ob die erste Berührung noch besteht oder nicht. Es gibt Beispiele für den zweiten Manipulationsmodus, die zwei gleichzeitige Berührungen erfordern (z. B. Zoomen eines Interaktionsobjektes). Auch gibt es Beispiele für den zweiten Manipulationsmodus, die nur einzelne Berührungen erfordern (z. B. Aktivieren oder Bewegen eines Interaktionsobjektes). So ist es denkbar, dass die erste Berührung noch besteht oder auch dass die erste Berührung nicht mehr besteht, wenn die zweite Berührung innerhalb der vorbestimmten Zeitdauer nach der ersten Berührung beginnt. In beiden Fällen gelangt man nicht in den ersten Manipulationsmodus, welcher grundsätzlich zwei gleichzeitige Berührungen erfordert.

Die dargestellten Inhalte umfassen bevorzugt Interaktionsobjekte. Die Interaktionsobjekte sind bevorzugt hierarchisch strukturiert.

Die Informationen über die erste Berührung werden bevorzugt zur Manipulation von Interaktionsobjekten auf einer ersten der Hierarchieebenen verwendet.

Die Informationen über die zweite Berührung werden bevorzugt zur Manipulation von Interaktionsobjekten auf einer zweiten der Hierarchieebenen verwendet, wenn die Informationen über die zweite Berührung gemäß dem ersten Manipulationsmodus verarbeitet werden.

Die Informationen über die zweite Berührung werden bevorzugt zur Manipulation von Interaktionsobjekten auf der ersten Hierarchieebene verwendet, wenn die Informationen über die zweite Berührung gemäß dem zweiten Manipulationsmodus verarbeitet werden.

Im Übrigen weist das erfindungsgemäße Verfahren gemäß dem zweiten Gegenstand der Erfindung auch bevorzugt diejenigen Merkmale auf, welche für das Verfahren gemäß dem ersten Gegenstand der Erfindung als bevorzugt angegeben sind.

Die erfindungsgemäße Vorrichtung weist eine Computerfunktionalität auf und ist beispielsweise durch ein Smartphone oder durch einen Computer, wie z. B. einen Tablet-PC gebildet. Die Vorrichtung umfasst eine mehrfachberührungsfähigen Anzeige zum visuellen Darstellen von Inhalten und zum Detektieren von Berührungen, die vom Bediener vorgenommen werden. Die mehrfachberührungsfähige Anzeige ist bevorzugt durch einen mehrfachberührungsfähigen Bildschirm gebildet. Derartige Berührungsbildschirme werden auch als Multi-Touchscreen oder Tastschirm bezeichnet. Die Anzeige kann alternativ auch durch eine zwei- oder dreidimensionale Projektionseinrichtung mit Dateneingabegeräten, wie Datenhandschuhen oder 3D-Mäusen gebildet sein. Im Weiteren umfasst die erfindungsgemäße Vorrichtung eine Datenverarbeitungseinheit, die zur Ausführung des erfindungsgemäßen Verfahrens nach dem ersten oder nach dem zweiten Gegenstand der Erfindung konfiguriert ist. Bevorzugt ist die Datenverarbeitungseinheit zur Ausführung bevorzugter Ausführungsformen des erfindungsgemäßen Verfahrens konfiguriert.

Weitere Vorteile, Einzelheiten und Weiterbildungen der Erfindung ergeben sich aus der nachfolgenden Beschreibung verschiedener Abläufe des erfindungsgemäßen Verfahrens, unter Bezugnahme auf die Zeichnung. Es zeigen:
- Fig. 1:: einen ersten Ablauf gemäß einer bevorzugten Ausführungsform des erfindungsgemäßen Verfahrens;
- Fig. 2:: einen zweiten Ablauf der in Fig. 1 gezeigten Ausführungsform;
- Fig. 3:: einen dritten Ablauf der in Fig. 1 gezeigten Ausführungsform; und
- Fig. 4:: ein Zustandsübergangsdiagramm einer bevorzugten Ausführungsform des erfindungsgemäßen Verfahrens.

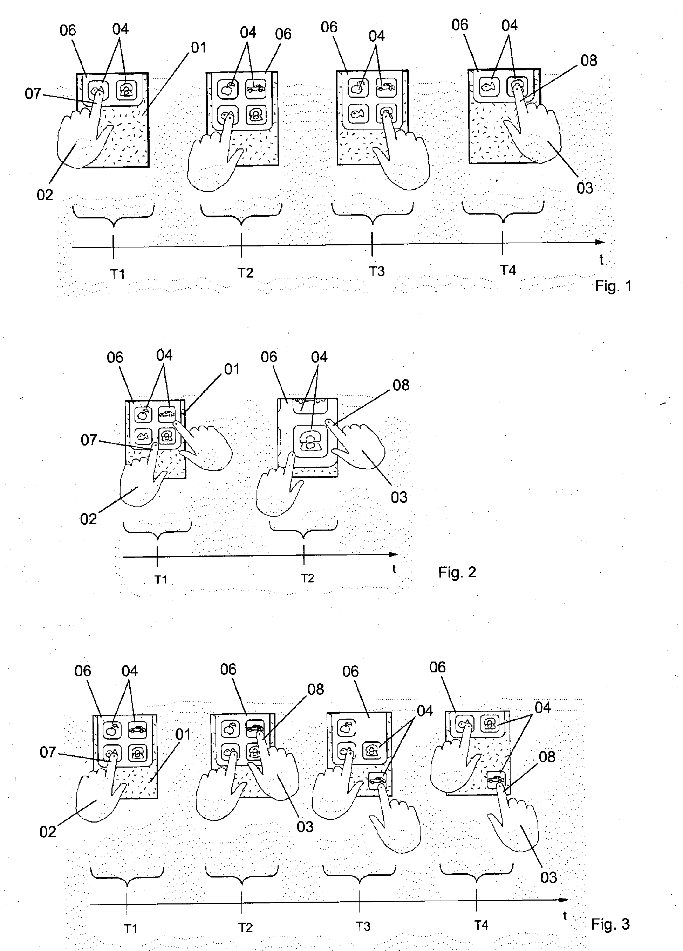

Fig. 1 zeigt einen ersten Ablauf einer bevorzugten Ausführungsform des erfindungsgemäßen Verfahrens. Dargestellt sind vier Zeitpunkte T1, T2, T3, T4 beim Bedienen eines mehrfachberührungsfähigen Berührungsbildschirmes 01 durch die linke Hand 02 und die rechte Hand 03 eines Bedieners. Bei dem mehrfachberührungsfähigen Berührungsbildschirmes 01 kann es sich beispielsweise um den Berührungsbildschirm eines Tablet-PC handeln.

Auf dem Berührungsbildschirm 01 sind einzelne Symbole 04 visuell dargestellt, welche innerhalb eines Fensters 06 gruppiert sind. Die Symbole 04 und das Fenster 06 können durch Berührung des Berührungsbildschirmes 01 scheinbar unmittelbar manipuliert werden und stellen daher Interaktionsobjekte dar. Da die Symbole 04 innerhalb des Fensters 06 gruppiert sind, bilden die Symbole 04 und das Fenster 06 eine hierarchische Struktur, in welcher die Symbole 04 eine untergeordnete Hierarchieebene bilden und das Fenster 06 eine übergeordnete Hierarchieebene bildet.

Zum Zeitpunkt T1 berührt der Bediener mit einem ersten Finger 07 seiner linken Hand 02 den Berührungsbildschirm 01 in einem Bereich, wo das Fenster 06 dargestellt ist. Diese singuläre Berührung führt dazu, dass das Fenster 06 in seiner Eigenschaft als Interaktionsobjekt der übergeordneten Hierarchieebene aktiviert wird. Dabei ist unerheblich, welches Symbol 04, d. h. welches Interaktionsobjekt der untergeordneten Hierarchieebene am Ort der Berührung durch den ersten Finger 07 dargestellt ist.

Bis zum Zeitpunkt T2 hat der Bediener den ersten Finger 07 seiner linken Hand 02 auf den Mehrfachberührungsbildschirm 01 bis zur dargestellten Position nach unten verschoben. In gleicher Weise wurde das Fenster 06 mit den darin dargestellten Symbolen 04 nach unten verschoben, der detektierten Verschiebung des ersten Fingers 07 folgend. Bei dem Aktivieren des Fensters 06 und bei dem Verschieben des Fensters 06 handelt es sich um Manipulationen gemäß einem ersten Manipulationsmodus. Der erste Manipulationsmodus umfasst insbesondere Funktionen, die eine Navigation in den dargestellten Inhalten ermöglichen.

Bis zum Zeitpunkt T3 hat der Bediener die Berührung des Mehrfachberührungsbildschirmes 01 mit dem ersten Finger 07 seiner linken Hand 02 beendet und stattdessen eine Berührung des Berührungsbildschirmes 01 an der dargestellten Position mit einem zweiten Finger 08 seiner rechten Hand 03 vorgenommen. Die Berührung des Berührungsbildschirmes 01 erfolgt wiederum in einem Bereich, in welchem das Fenster 06 dargestellt ist. Es ist wieder unerheblich, welches Symbol 04 an dem Ort der Berührung dargestellt ist. Da der Berührungsbildschirm 01 wiederum durch eine singuläre Berührung bedient wird, werden die Informationen über die Berührung ebenso gemäß dem ersten Manipulationsmodus verarbeitet. Daher wird durch diese Berührung auch wieder das Fenster 06 aktiviert und durch eine Bewegung des zweiten Fingers 08 auf dem Berührungsbildschirm 01 bis zu einer in Bezug auf den Zeitpunkt T4 dargestellten Position verschoben.

Fig. 2 zeigt einen zweiten Ablauf der bevorzugten Ausführungsform des erfindungsgemäßen Verfahrens. Zum dargestellten Zeitpunkt T1 hat der Bediener mit dem ersten Finger 07 seiner linken Hand 02 und mit dem zweiten Finger 08 seiner rechten Hand 03 nahezu gleichzeitig den Berührungsbildschirm 01 berührt. Jedenfalls erfolgte die Berührung durch den ersten Finger 07 und die Berührung durch den zweiten Finger 08 mit einem zeitlichen Abstand, welcher kleiner als eine vorbestimmte Zeitdauer von beispielsweise 100 ms ist. Diese vom Bediener beabsichtigte Gleichzeitigkeit führt dazu, dass die Berührungen durch den ersten Finger 07 und die Berührung durch den zweiten Finger 08 gemäß einem zweiten Manipulationsmodus ausgewertet werden. Der zweite Manipulationsmodus sieht in dieser Ausführungsform vor, dass beide Berührungen auf das Fenster 06 angewendet werden. Beide Berührungen werden somit auf dasselbe Interaktionsobjekt der übergeordneten Hierarchieebene angewendet.

Bis zum Zeitpunkt T2 hat der Bediener den ersten Finger 07 seiner linken Hand 02 und den zweiten Finger 08 seiner rechten Hand 03 so auf dem Berührungsbildschirm 01 verschoben, dass die Orte der beiden Berührungen einen größeren Abstand zueinander als zum Zeitpunkt T1 aufweisen. Gemäß dem zweiten Manipulationsmodus wird das Fenster 06 skaliert, sodass es zum Zeitpunkt T2 größer dargestellt ist.

Fig. 3 zeigt einen weiteren Ablauf der bevorzugten Ausführungsform des erfindungsgemäßen Verfahrens. Zum dargestellten Zeitpunkt T1 hat der Bediener mit dem ersten Finger 07 seiner linken Hand 02 den Berührungsbildschirm 01 im Bereich des Fensters 06 berührt. Zum Zeitpunkt T2 hat der Bediener den Berührungsbildschirm 01 zusätzlich mit dem zweiten Finger 08 seiner rechten Hand 03 berührt. Da die beiden Zeitpunkte T1 und T2 mehr als die vorbestimmte Zeitdauer von beispielsweise 100 ms auseinander liegen, werden die beiden Berührungen im Gegensatz zu dem in Fig. 2 gezeigten Ablauf nicht gemäß dem zweiten Manipulationsmodus, sondern jeweils gemäß dem ersten Manipulationsmodus ausgewertet. Dabei wird die Berührung durch den zweiten Finger 08 der rechten Hand 03 im Gegensatz zu dem in Fig. 2 gezeigten Ablauf nicht auf das Fenster 06 bezogen, sondern auf eines der Interaktionsobjekte der untergeordneten Hierarchieebene, nämlich auf eines der Symbole 04 und zwar auf dasjenige Symbol 04, welches am Ort der Berührung durch den zweiten Finger 08 dargestellt ist. Folglich beziehen sich beide Berührungen durch die Finger 07, 08 auf Interaktionsobjekte 04, 06 unterschiedlicher Hierarchieebenen. Beide Berührungen durch die Finger 07, 08 werden gemäß dem ersten Manipulationsmodus verarbeitet, sodass ein Aktivieren und nachfolgend ggf. ein Bewegen der Interaktionsobjekte 04, 06 erfolgt.

Zum Zeitpunkt T3 hat der Bediener den zweiten Finger 08 seiner rechten Hand 03 auf dem Berührungsbildschirm 01 verschoben, nämlich nach unten, während er den ersten Finger 07 seiner linken Hand 02 örtlich unverändert belassen hat. Die Bewegung des zweiten Fingers 08 führte dazu, dass das aktivierte Symbol 04 mit dem zweiten Finger 08 nach unten verschoben wurde, wobei dies zum Entfernen des Symbols 04 aus dem Fenster 06 führte. Da sich die Berührung durch den ersten Finger 07 auf das Fenster 06 bezieht, führte das Belassen des ersten Fingers 07 am gewählten Ort dazu, dass das Fenster 06 seine Position beibehalten hat. Der gezeigte Ablauf stellt eine "Halten und Bewegen"-Metapher (Hold and Move) dar.

Bis zum Zeitpunkt T4 hat der Bediener auch den ersten Finger 07 seiner linken Hand 02 verschoben, nämlich nach oben, sodass auch das Fenster 06 in seiner Darstellung auf dem Berührungsbildschirm 01 nach oben verschoben wurde. Der Bediener hätte auch die Bewegungen des ersten Fingers 07 und des zweiten Fingers 08 in umgekehrter Reihenfolge oder auch gleichzeitig durchführen können, um den in Bezug zum Zeitpunkt T4 dargestellten Zustand zu erzielen.

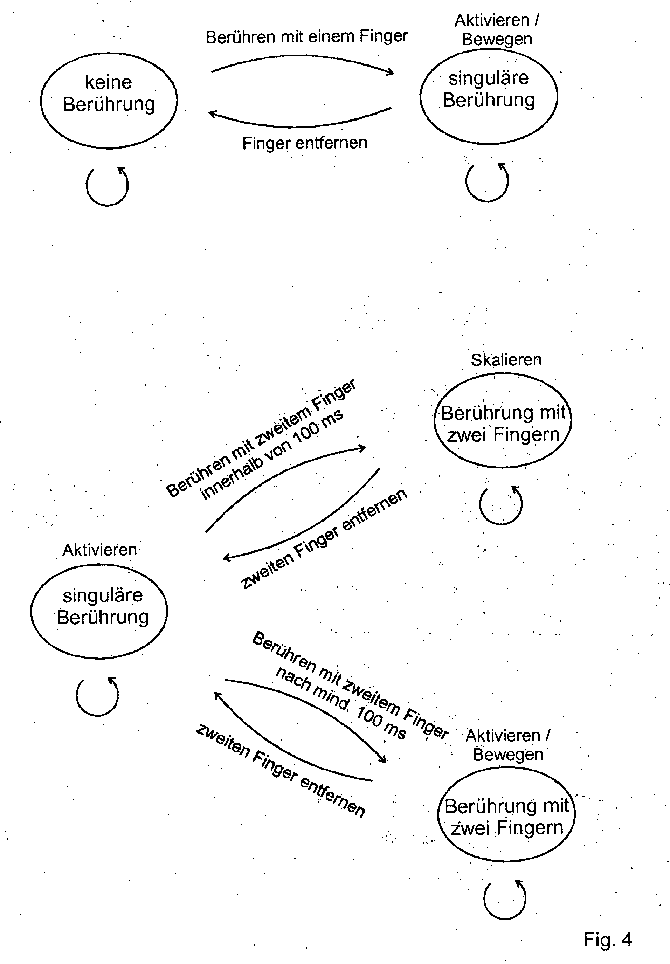

Fig. 4 zeigt ein Zustandsübergangsdiagramm einer bevorzugten Ausführungsform des erfindungsgemäßen Verfahrens. Im oberen Teil des Zustandsübergangsdiagramms ist der Übergang von einem Zustand "keiner Berührung" in den Zustand einer "singulären Berührung" und zurück dargestellt. Die singuläre Berührung des mehrfachberührungsfähigen Berührungsbildschirmes 01 (gezeigt in Fig. 1) führt zu einer Manipulation des am Ort der Berührung dargestellten Interaktionsobjektes der übergeordneten Hierarchieebene gemäß dem ersten Manipulationsmodus. Hierdurch ist das in Fig. 1 gezeigte Aktivieren und Bewegen des Fensters 06 möglich.

Der untere Teil des Zustandsübergangsdiagramms zeigt den Übergang von einem Zustand "singulärer Berührung" in einen Zustand der "Berührung durch zwei Finger" und umgekehrt, wobei unterschieden wird, ob dieser Zustandsübergang in weniger oder mehr als beispielsweise 100 ms erfolgt. Erfolgt dieser Übergang in weniger als 100 ms, so werden beide Berührungen gemeinsam auf das Interaktionsobjekt der ersten Hierarchieebene angewendet. Durch ein Bewegen der beiden Berührungen erfolgt das in Fig. 2 gezeigte Skalieren des Fensters 06.

Erfolgt der Zustandsübergang in mehr als 100 ms, so führt die zweite Berührung zu einer Manipulation eines der Interaktionsobjekte der zweiten Hierarchieebene, wie z. B. die Manipulation des Symbols 04 (gezeigt in Fig. 3). Hierdurch kann eine Manipulation zweier Interaktionsobjekte gemäß der in Fig. 3 dargestellten "Halten und Bewegen"-Metapher erfolgen.

### Bezugszeichenliste

- 01: - mehrfachberührungsfähiger Berührungsbildschirm
- 02: - linke Hand
- 03: - rechte Hand
- 04: - Symbol
- 05: - -
- 06: - Fenster
- 07: - erster Finger
- 08: - zweiter Finger

## Patentansprüche

1. Verfahren zum Betrieb einer von einer Datenverarbeitungseinheit angesteuerten mehrfachberührungsfähigen Anzeige (01), folgende Schritte umfassend:
- visuelles Darstellen von manipulierbaren Inhalten auf oder innerhalb der mehrfachberührungsfähigen Anzeige (01), wobei die Inhalte hierarchisch strukturierte Interaktionsobjekte (04, 06) zumindest einer ersten Hierarchieebene und einer zweiten Hierarchieebene umfassen;
- Detektieren einer ersten Berührung der mehrfachberührungsfähigen Anzeige (01), wobei das Detektieren der ersten Berührung zu von der Datenverarbeitungseinheit verarbeitungsfähigen Informationen über die erste Berührung führt, welche von der Datenverarbeitungseinheit zur Manipulation von Interaktionsobjekten (04) der ersten Hierarchieebene verwendet werden; und
- Detektieren einer zweiten Berührung der mehrfachberührungsfähigen Anzeige (01), wobei das Detektieren der zweiten Berührung zu von der Datenverarbeitungseinheit verarbeitungsfähigen Informationen über die zweite Berührung führt;
**dadurch gekennzeichnet, dass** die Informationen über die zweite Berührung von der Datenverarbeitungseinheit zur Manipulation von Interaktionsobjekten (04) der zweiten Hierarchieebene verwendet werden, wenn die zweite Berührung mehr als eine vorbestimmte Zeitdauer nach der ersten Berührung detektiert wird und die erste Berührung weiterhin detektiert wird; und dass die Informationen über die zweite Berührung von der Datenverarbeitungseinheit zur Manipulation von Interaktionsobjekten (06) der ersten Hierarchieebene verwendet werden, wenn die zweite Berührung nicht mehr als die vorbestimmte Zeitdauer nach der ersten Berührung detektiert wird.

2. Verfahren nach Anspruch 1, **dadurch gekennzeichnet, dass** die Informationen über die erste Berührung und die Informationen über die zweite Berührung jeweils gemäß einem ersten Manipulationsmodus verarbeitet werden, wenn die Informationen über die zweite Berührung zur Manipulation von Interaktionsobjekten (04) der zweiten Hierarchieebene verwendet werden.

3. Verfahren nach Anspruch 1 oder 2, **dadurch gekennzeichnet, dass** die Informationen über die erste Berührung und die Informationen über die zweite Berührung von der Datenverarbeitungseinheit gemeinsam gemäß einem zweiten Manipulationsmodus verarbeitet werden, wenn die Informationen über die zweite Berührung zur Manipulation von Interaktionsobjekten (06) der ersten Hierarchieebene verwendet werden.

4. Verfahren nach einem der Ansprüche 1 bis 3, **dadurch gekennzeichnet, dass** die Interaktionsobjekte (04) der zweiten Hierarchieebene elementar sind, sodass die zweite Hierarchieebene die unterste Hierarchieebene darstellt.

5. Verfahren nach Anspruch 4, **dadurch gekennzeichnet, dass** die Interaktionsobjekte der ersten Hierarchieebene durch Gruppen (06) der elementaren Interaktionsobjekte (04) der zweiten Hierarchieebene gebildet sind.

6. Verfahren nach einem der Ansprüche 1 bis 5, **dadurch gekennzeichnet, dass** die Interaktionsobjekte durch Symbole (04), Piktogramme, Bilder, Fenster (06) und/oder symbolisierte Ordner von einzelnen Symbolen gebildet sind.

7. Verfahren nach einem der Ansprüche 1 bis 6, **dadurch gekennzeichnet, dass** der erste Manipulationsmodus und der zweite Manipulationsmodus jeweils vorschreiben, wie die dargestellten Interaktionsobjekte (04, 06) ausgehend von den Informationen über die jeweilige Berührung zu verändern sind.

8. Verfahren nach einem der Ansprüche 1 bis 7, **dadurch gekennzeichnet, dass** die vorbestimmte Zeitdauer zwischen 20 ms und 1 s beträgt.

9. Verfahren zum Betrieb einer von einer Datenverarbeitungseinheit angesteuerten mehrfachberührungsfähigen Anzeige (01), folgende Schritte umfassend:
- visuelles Darstellen von Inhalten (04, 06) auf oder innerhalb der mehrfachberührungsfähigen Anzeige (01), wobei die Inhalte von der Datenverarbeitungseinheit gemäß einem ersten Manipulationsmodus und gemäß einem zweiten Manipulationsmodus manipulierbar sind;
- Detektieren einer ersten Berührung der mehrfachberührungsfähigen Anzeige (01), wobei das Detektieren der ersten Berührung zu von der Datenverarbeitungseinheit verarbeitungsfähigen Informationen über die erste Berührung führt; und
- Detektieren einer zweiten Berührung der mehrfachberührungsfähigen Anzeige (01), wobei das Detektieren der zweiten Berührung zu von der Datenverarbeitungseinheit verarbeitungsfähigen Informationen über die zweite Berührung führt;
**dadurch gekennzeichnet, dass** die Informationen über die erste Berührung und die Informationen über die zweite Berührung jeweils gemäß dem ersten Manipulationsmodus verarbeitet werden, wenn die zweite Berührung mehr als eine vorbestimmte Zeitdauer nach der ersten Berührung detektiert wird und die erste Berührung weiterhin detektiert wird; und dass die Informationen über die erste Berührung und die Informationen über die zweite Berührung gemäß dem zweiten Manipulationsmodus verarbeitet werden, wenn die zweite Berührung nicht mehr als eine vorbestimmte Zeitdauer nach der ersten Berührung detektiert wird.

10. Vorrichtung mit Computerfunktionalität, umfassend:
- eine mehrfachberührungsfähigen Anzeige (01) zum visuellen Darstellen von Inhalten (04, 06) und zum Detektieren von Berührungen der mehrfachberührungsfähigen Anzeige (01); und
- eine Datenverarbeitungseinheit, die zur Ausführung des Verfahrens nach einem der Ansprüche 1 bis 9 konfiguriert ist.

## Claims

1. Method for operating a multi-touch-capable display (01) that is controlled by a data processing unit, comprising the following steps:
- visually representing content that can be manipulated on or within the multi-touch-capable display (01), the content comprising hierarchically structured interaction objects (04, 06) of at least one first hierarchy level and one second hierarchy level;
- detecting a first touch of the multi-touch-capable display (01), the detection of the first touch resulting in information about the first touch which can be processed by the data processing unit and which can be used by the data processing unit to manipulate interaction objects (04) of the first hierarchy level; and
- detecting a second touch of the multi-touch-capable display (01), the detection of the second touch resulting in information about the second touch which can be processed by the data processing unit;
**characterized in that** the information about the second touch is used by the data processing unit to manipulate interaction objects (04) of the second hierarchy level if the second touch is detected more than a predetermined time period after the first touch and the first touch continues to be detected; and the information about the second touch is used by the data processing unit to manipulate interaction objects (06) of the first hierarchy level if the second touch is detected not later than the predetermined time period after the first touch.

2. Method according to claim 1, **characterized in that** the information about the first touch and the information about the second touch is processed in each case according to a first manipulation mode if the information about the second touch is used to manipulate interaction objects (04) of the second hierarchy level.

3. Method according to claim 1 or 2, **characterized in that** the information about the first touch and the information about the second touch are processed together by the data processing unit according to a second manipulation mode if the information about the second touch is used to manipulate interaction objects (06) of the first hierarchy level.

4. Method according to one of claims 1 to 3, **characterized in that** the interaction objects (04) of the second hierarchy level are elementary, so that the second hierarchy level is the lowermost hierarchy level.

5. Method according to claim 4, **characterized in that** the interaction objects of the first hierarchy level are formed by groups (06) of the elementary interaction objects (04) of the second hierarchy level.

6. Method according to one of claims 1 to 5, **characterized in that** the interaction objects are formed by symbols (04), pictograms, images, windows (06) and/or symbolized folders of individual symbols.

7. Method according to one of claims 1 to 6, **characterized in that** the first manipulation mode and the second manipulation mode each specify how, proceeding from the information about the respective touch, the represented interaction objects (04, 06) are to be modified.

8. Method according to one of claims 1 to 7, **characterized in that** the predetermined time period is between 20 ms and 1 s.

9. Method for operating a multi-touch-capable display (01) that is controlled by a data processing unit, comprising the following steps:
- visually representing content (04, 06) on or within the multi-touch-capable display (01), the content being able to be manipulated by the data processing unit according to a first manipulation mode and according to a second manipulation mode;
- detecting a first touch of the multi-touch-capable display (01), the detection of the first touch resulting in information about the first touch which can be processed by the data processing unit; and
- detecting a second touch of the multi-touch-capable display (01), the detection of the second touch resulting in information about the second touch which can be processed by the data processing unit;
**characterized in that** the information about the first touch and the information about the second touch is each processed according to the first manipulation mode if the second touch is detected more than a predetermined time period after the first touch and the first touch is still detected; and the information about the first touch and the information about the second touch are processed according to the second manipulation mode if the second touch is detected not longer than a predetermined time period after the first touch.

10. Device having computer functionality, comprising:
- a multi-touch-capable display (01) for visually representing content (04, 06) and for detecting touches of the multi-touch-capable display (01); and
- a data processing unit, which is configured to carry out the method according to any one of claims 1 to 9.

## Revendications

1. Procédé pour faire fonctionner un affichage à effleurements tactiles multiples (01) commandé par une unité de traitement de données, comprenant les étapes suivantes :
- la représentation visuelle de contenus manipulables sur l'affichage à effleurements tactiles multiples (01) ou à l'intérieur de celui-ci, dans lequel les contenus comprennent des objets interactifs structurés hiérarchiquement (04, 06) d'au moins un premier niveau hiérarchique et d'un deuxième niveau hiérarchique ;
- la détection d'un premier effleurement de l'affichage à effleurements tactiles multiples (01), dans lequel la détection du premier effleurement résulte en des informations sur le premier effleurement pouvant être traitées par l'unité de traitement de données, lesquelles informations sont utilisées par l'unité de traitement de données pour la manipulation d'objets interactifs (04) du premier niveau hiérarchique ; et
- la détection d'un deuxième effleurement de l'affichage à effleurements tactiles multiples (01), dans lequel la détection du deuxième effleurement résulte en des informations sur le deuxième effleurement pouvant être traitées par l'unité de traitement de données ;
**caractérisé en ce que** les informations sur le deuxième effleurement sont utilisées par l'unité de traitement de données pour la manipulation d'objets interactifs (04) du deuxième niveau hiérarchique si le deuxième effleurement est détecté au bout d'un laps de temps plus long qu'un laps de temps prédéterminé après le premier effleurement et si le premier effleurement continue d'être détecté ; et **en ce que** les informations sur le deuxième effleurement sont utilisées par l'unité de traitement de données pour la manipulation d'objets interactifs (06) du premier niveau hiérarchique si le deuxième effleurement est détecté au bout d'un laps de temps qui n'est pas plus long que le laps de temps prédéterminé après le premier effleurement.

2. Procédé selon la revendication 1, **caractérisé en ce que** les informations sur le premier effleurement et les informations sur le deuxième effleurement sont respectivement traitées selon un premier mode de manipulation si les informations sur le deuxième effleurement sont utilisées pour la manipulation d'objets interactifs (04) du deuxième niveau hiérarchique.

3. Procédé selon la revendication 1 ou 2, **caractérisé en ce que** les informations sur le premier effleurement et les informations sur le deuxième effleurement sont traitées en commun par l'unité de traitement de données conformément à un deuxième mode de manipulation si les informations sur le deuxième effleurement sont utilisées pour la manipulation d'objets interactifs (06) du premier niveau hiérarchique.

4. Procédé selon l'une des revendications 1 à 3, **caractérisé en ce que** les objets interactifs (04) du deuxième niveau hiérarchique sont élémentaires, de sorte que le deuxième niveau hiérarchique constitue le niveau hiérarchique le plus bas.

5. Procédé selon la revendication 4, **caractérisé en ce que** les objets interactifs du premier niveau hiérarchique sont formés par des groupes (06) formés par les objets interactifs (04) élémentaires du deuxième niveau hiérarchique.

6. Procédé selon l'une des revendications 1 à 5, **caractérisé en ce que** les objets interactifs sont formés par des symboles (04), des pictogrammes, des images, des fenêtres (06) et/ou des dossiers symbolisés de symboles individuels.

7. Procédé selon l'une des revendications 1 à 6, **caractérisé en ce que** le premier mode de manipulation et le deuxième mode de manipulation prescrivent respectivement de quelle manière il convient de modifier les objets interactifs (04, 06) représentés en se basant sur les informations sur l'effleurement respectif.

8. Procédé selon l'une des revendications 1 à 7, **caractérisé en ce que** le laps de temps prédéterminé est compris entre 20 ms et 1 s.

9. Procédé pour faire fonctionner un affichage à effleurements tactiles multiples (01) commandé par une unité de traitement de données, comprenant les étapes suivantes :
- la représentation visuelle de contenus (04, 06) sur l'affichage à effleurements tactiles multiples (01) ou à l'intérieur de celui-ci, dans lequel les contenus sont manipulables par l'unité de traitement de données conformément à un premier mode de manipulation et conformément à un deuxième mode de manipulation ;
- la détection d'un premier effleurement de l'affichage à effleurements tactiles multiples (01), dans lequel la détection du premier effleurement résulte en des informations sur le premier effleurement pouvant être traitées par l'unité de traitement de données ; et
- la détection d'un deuxième effleurement de l'affichage à effleurements tactiles multiples (01), dans lequel la détection du deuxième effleurement résulte en des informations sur le deuxième effleurement pouvant être traitées par l'unité de traitement de données ;
**caractérisé en ce que** les informations sur le premier effleurement et les informations sur le deuxième effleurement sont respectivement traitées conformément au premier mode de manipulation si le deuxième effleurement est détecté au bout d'un laps de temps plus long qu'un laps de temps prédéterminé après le premier effleurement et si le premier effleurement continue d'être détecté ; et **en ce que** les informations sur le premier effleurement et les informations sur le deuxième effleurement sont traitées conformément au deuxième mode de manipulation si le deuxième effleurement est détecté au bout d'un laps de temps qui n'est pas plus long qu'un laps de temps prédéterminé après le premier effleurement.

10. Dispositif avec une fonctionnalité d'ordinateur, comprenant :
- un affichage à effleurements tactiles multiples (01) pour la représentation visuelle de contenus (04, 06) et pour détecter des effleurements de l'affichage à effleurements tactiles multiples (01) ; et
- une unité de traitement de données, laquelle est configurée pour exécuter le procédé selon l'une des revendications 1 à 9.
